# EUROPEAN PATENT APPLICATION

(11) **EP 3 925 820 A1**
(43) Date of publication of application: **22.12.2021**
(21) Application number: 21178227.1
(22) Date of filing: 08.06.2021
(51) Int. Cl.: B60L 58/21, B60L 58/22

(54) **VEHICLE DRIVE SYSTEM**

(30) Priority: 19.06.2020 JP 2020106232
(71) Applicant: MAZDA MOTOR CORPORATION, Fuchu-cho, Aki-gun Hiroshima 730-8670 (JP)
(72) Inventor: FURUKAWA, Akihiro, Fuchu-cho, Aki-gun 730-8670 (JP); USAMI, Ikuo, Fuchu-cho, Aki-gun 730-8670 (JP); HIRANO, Seiyo, Fuchu-cho, Aki-gun 730-8670 (JP)
(74) Representative: Müller-Boré & Partner Patentanwälte PartG mbB

(57) **Abstract**

In a vehicle drive system using a motor for cruising, the connection node of serially-connected first and second batteries is connected with the connection node of first and second capacitors of an inverter. The operation of the inverter is controlled so that the motor drive voltage is higher than the output voltage of each of the first and second batteries. A balance circuit balances the voltages of the first and second capacitors by performing charge/discharge control between the first and second batteries.

## Description

### BACKGROUND

The present disclosure relates to a vehicle drive system that uses a motor for cruising and a battery.

A vehicle drive system for driving a motor for cruising by a high-voltage battery has been conventionally known. Since the power output of the motor depends on the current and the voltage (P = I · V · cosθ), to increase the output of the motor, it is effective to raise the voltage of the battery. In general, a high-voltage battery of 60V or higher is used for driving a motor for cruising.

In a device using a high-voltage battery, measures against high voltage are necessary for parts and wires of the device, and this leads to increase in cost and weight. For example, wires for connecting an inverter with the battery become large in size and heavy. Also, as connectors for the inverter and the battery, expensive ones resistant to high voltage must be used. On the other hand, since the current value required for attaining given motor output becomes smaller as the voltage is higher (P = I · V · cosθ), motor loss can be reduced (Ploss = R · I²). This improves the electric mileage of the vehicle. In recent years, a configuration having a higher-voltage battery is in the mainstream, placing higher priority on the merit of improving the electric mileage than the demerit of increasing the vehicle weight and cost.

Japanese Unexamined Patent Publication No. 2019-162964 discloses a configuration of a hybrid drive unit principally using the driving force of a motor. In this configuration, a low-voltage battery and a capacitor are serially connected, forming a high-voltage power supply for driving the motor.

In general, a capacitor can supply a larger current momentarily than a normal battery. In the configuration of the cited patent document, such a capacitor with good responsiveness is used for acceleration at the startup of a vehicle, for example. However, since a capacitor is small in energy density, it is difficult for the capacitor to supply electric power to the motor for a long time. It is therefore preferable to use a battery, not a capacitor, from the standpoint of securing the cruising distance.

An objective of the present disclosure is providing a vehicle drive system using a motor for cruising, capable of increasing the output of the motor, achieving long-time power supply to the motor, and making full use of the potential of the vehicle drive system while keeping the vehicle weight and cost from increasing.

### SUMMARY

The inventors of the present disclosure have attained the following findings as a result of experiments and examinations on the vehicle drive system having the configuration described above.

That is, in the above-described vehicle drive system, the connection node of serially-connected first and second batteries is connected to the ground, to reduce the voltage output from the battery unit. Also, a 3-level inverter is used as the inverter, so that a motor drive voltage higher than the battery voltage is generated. It is therefore possible to implement a vehicle drive system with a reduced weight, low cost, and high motor output.

As a result of experiments by the present inventers, however, it has been found that the vehicle drive system having the above-described configuration fails to secure output performance as excellent as expected. That is, a deviation arises in consumption energy between a capacitor that supplies a positive-side voltage and a capacitor that supplies a negative-side voltage in the inverter. The voltage of the capacitor greater in consumption energy drops, and the voltage of the capacitor smaller in consumption energy rises. As a result, an overvoltage may be applied to electric components such as MOSFETs connected to the voltage-rising capacitor, causing a possibility of damaging such electric components. To avoid this problem, the inverter output is forced to be restricted. This results in failing to make full use of the potential of the vehicle drive system.

The present inventors have thus attained the findings that, in order to adequately secure the motor output performance in the vehicle drive system having the above-described configuration, it is important to strike a balance in charged amount/voltage between the capacitor that supplies a positive-side voltage and the capacitor that supplies a negative-side voltage in the inverter. Based on the findings, the present inventors have invented a configuration as described below.

That is, according to the present disclosure, the vehicle drive system includes: a motor that generates driving force for drive wheels; an inverter electrically connected to the motor, having a first capacitor that supplies a positive-side voltage and a second capacitor that supplies a negative-side voltage; a battery unit that supplies electric power to the inverter; and a control unit that controls operation of the inverter, wherein the battery unit has serially-connected first and second batteries, and a negative pole of the first battery and a positive pole of the second battery that are mutually connected are connected with a connection node of the first and second capacitors of the inverter, the control unit controls the operation of the inverter so that a voltage output from the inverter to the motor is higher than an output voltage of the first battery and also than an output voltage of the second battery, and the vehicle drive system further comprises a balance circuit that balances the voltages of the first and second capacitors by performing charge/discharge control between the first and second batteries.

With the above configuration, since the connection node of the serially-connected first and second batteries is connected with the connection node of the first capacitor that supplies a positive-side voltage and the second capacitor that supplies a negative-side voltage in the inverter, a positive voltage of the same value as the output voltage of the first battery and a negative voltage of which the absolute value is the same as the output voltage of the second battery, with reference to the ground, are output from the battery unit. The operation of the inverter is controlled so that the motor drive voltage output from the inverter is higher than the output voltage of the first battery and also than the output voltage of the second battery. This makes it possible to increase the output of the motor while reducing the voltage of the output of the battery unit to keep the vehicle weight and cost from increasing. Moreover, the balance circuit can balance the voltages of the first and second capacitors by performing charge/discharge control between the first and second batteries. It is therefore possible to make full use of the potential of the vehicle drive system and adequately secure the motor output performance while keeping the torque fluctuations of the motor to a minimum.

The balance circuit may include first and second switches serially connected between a positive pole and the negative pole of the first battery, third and fourth switches serially connected between the positive pole and a negative pole of the second battery, and a capacitor of which one end is connected to a node of the first switch and the second switch and the other end is connected to a node of the third switch and the fourth switch.

Thus, the balance circuit for balancing the voltages of the first and second capacitors can be implemented by a simple configuration.

The vehicle drive system described above may further include a controller that controls on/off of the first to fourth switches of the balance circuit, wherein if the voltage of the second capacitor is higher than the voltage of the first capacitor, the controller may perform first operation of turning off the first and third switches and turning on the second and fourth switches, and thereafter performs second operation of turning on the first and third switches and turning off the second and fourth switches, and if the voltage of the first capacitor is higher than the voltage of the second capacitor, the controller may perform the second operation and thereafter performs the first operation.

With the above configuration, when the voltage of the second capacitor is higher than that of the first capacitor, part of the energy of the second battery can be stored in a capacitor by the first operation, and the energy stored in the capacitor can be transferred to the first battery by the second operation. Contrarily, when the energy of the first capacitor is higher than that of the second capacitor, part of the energy of the first battery can be stored in a capacitor by the second operation, and the energy stored in the capacitor can be transferred to the second battery by the first operation.

The balance circuit may include an inductor provided between a node of the second and third switches and the node of the first and second capacitors.

With the above configuration, energy can be transferred to a capacitor by use of LC resonance even when the voltage difference between the first and second batteries is small.

The battery unit may be configured so that third and fourth batteries each in a form of a cartridge are removably loaded, and the loaded third battery may be connected in parallel with the first battery and the loaded fourth battery may be connected in parallel with the second battery.

With the above configuration, the removable third and fourth batteries can be used as auxiliaries to the first and second batteries.

The inverter may be a multi-level inverter.

With the above configuration, the operation of the inverter can be easily controlled so that the voltage output from the inverter to the motor becomes higher than the output voltage of the first battery and also than the output voltage of the second battery.

The output voltages of the first and second batteries are each less than 60V, for example.

As described above, according to the present disclosure, in a vehicle drive system using a motor for cruising, it is possible to increase the output of the motor, achieve long-time power supply to the motor, and make full use of the potential of the vehicle drive system while keeping the vehicle weight and cost from increasing.

### BRIEF DESCRIPTION OF THE DRAWINGS

FIG. 1 shows an example of the layout of a vehicle drive system of an embodiment mounted in a vehicle.
FIG. 2 shows a configuration example of the vehicle drive system of the embodiment.
FIG. 3 shows a main circuit configuration for motor driving in the vehicle drive system of the embodiment.
FIG. 4 shows a main circuit configuration for motor driving according to a comparative example.
FIG. 5A shows a configuration outline of a 3-level inverter, and FIG. 5B shows an operation of the 3-level inverter.
FIG. 6 shows an inverter circuit of one phase of the 3-level inverter.
FIG. 7 shows a detailed operation diagram of the 3-level inverter.
FIG. 8 shows an example of a circuit configuration related to batteries and the inverter in the vehicle drive system of the embodiment.
FIG. 9 shows a circuit configuration example of a balance circuit in FIG. 8.
FIGS. 10A and 10B are views illustrating an effect of the balance circuit.
FIG. 11A shows a circuit configuration of a first comparative example, and FIG. 11B shows a change in capacitor voltage.
FIG. 12A shows a circuit configuration of a second comparative example, and FIG. 12B shows a change in capacitor voltage.
FIG. 13 is a flowchart showing the operation of the balance circuit.
FIGS. 14A to 14D are views showing the operation of the balance circuit of transferring energy.
FIG. 15 is a view showing on/off of switches in FIGS. 14A to 14D.

### DETAILED DESCRIPTION

An illustrative embodiment will be described hereinafter in detail with reference to the accompanying drawings.

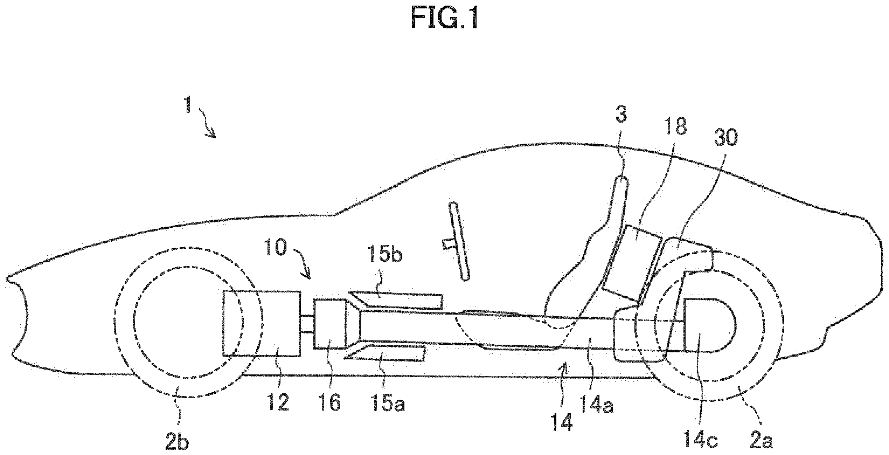

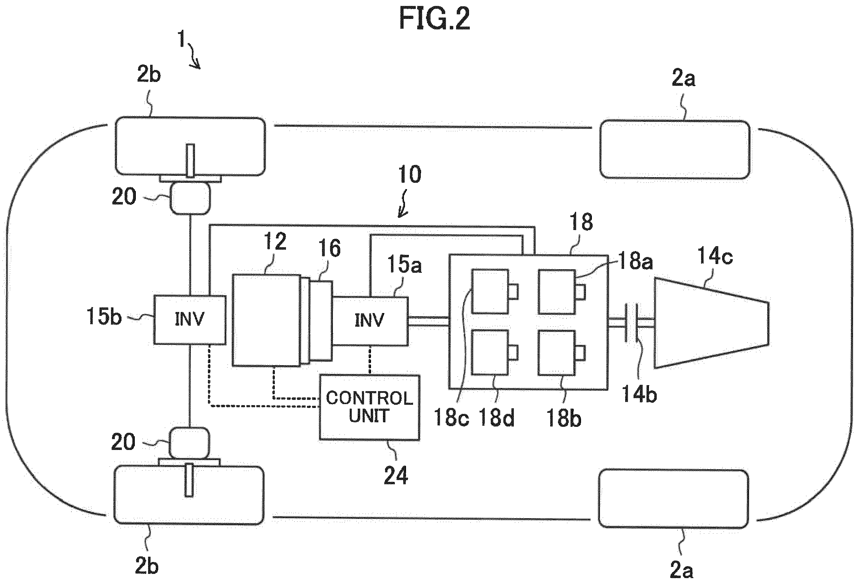

FIG. 1 shows an example of the layout of a vehicle drive system of this embodiment mounted in a vehicle, illustrated as a phantom view of the vehicle viewed from a side. FIG. 2 shows a configuration example of the vehicle drive system of this embodiment.

As shown in FIGS. 1 and 2, a vehicle drive system 10 is mounted in a vehicle 1. The vehicle drive system 10 includes: an engine 12 that drives rear wheels 2a; a force transmission mechanism 14 that transmits driving force to the rear wheels 2a; a main drive motor 16 that drives the rear wheels 2a; sub-drive motors 20 that drive front wheels 2b; an inverter 15a electrically connected to the main drive motor 16; an inverter 15b electrically connected to the sub-drive motors 20; a battery unit 18 that supplies electric power to the inverters 15a and 15b; a control unit 24; and a fuel tank 30 that stores fuel to be supplied to the engine 12. That is, the vehicle drive system 10 is a hybrid drive system.

The engine 12 is an internal combustion engine for generating driving force for the rear wheels 2a that are main drive wheels of the vehicle 1, which is a rotary engine in this embodiment. The engine 12 may otherwise be an engine other than the rotary engine, such as a reciprocating engine. The engine 12 is placed in the front part of the vehicle 1 and drives the rear wheels 2a through the force transmission mechanism 14.

The force transmission mechanism 14 is configured to transmit the driving force generated by the engine 12 to the rear wheels 2a that are the main drive wheels. The force transmission mechanism 14 includes a propeller shaft 14a connected to the engine 12, a clutch 14b, and a transmission 14c that is a stepped gearbox. The propeller shaft 14a extends from the engine 12 placed in the front part of the vehicle 1 toward the rear of the vehicle 1 through a propeller shaft tunnel (not shown). The rear end of the propeller shaft 14a is connected to the transmission 14c via the clutch 14b. An output axis of the transmission 14c is connected to axles (not shown) of the rear wheels 2a, to drive the rear wheels 2a.

The main drive motor 16 is an electric motor for generating driving force for the rear wheels 2a that are the main drive wheels of the vehicle 1, placed adjacent to the engine 12 on the rear side of the engine 12. The main drive motor 16 is serially connected with the engine 12, so that the driving force generated by the main drive motor 16 is also transmitted to the rear wheels 2a through the force transmission mechanism 14. In this embodiment, a 25 kW permanent magnet synchronous motor driven at 48V is used as the main drive motor 16.

The inverter 15a, placed adjacent to the main drive motor 16, converts DC electric power supplied from the battery unit 18 to AC electric power and supplies the power to the main drive motor 16.

The sub-drive motors 20 are electric motors for generating driving force for the front wheels 2b that are sub-drive wheels and, in this embodiment, are in-wheel motors housed in the front wheels 2b. In this embodiment, 17 kW induction motors are used as the sub-drive motors 20.

The inverter 15b converts DC electric power supplied from the battery unit 18 to AC electric power and supplies the power to the sub-drive motors 20.

The battery unit 18 is placed behind a seat 3 and in front of the fuel tank 30. In this embodiment, the battery unit 18 includes four batteries 18a, 18b, 18c, and 18d. Each of the batteries 18a to 18d, having an output voltage of 48V, includes four serially-connected 12V battery cells inside.

The batteries 18a and 18b are electrically connected in series and fixed in the battery unit 18. As will be described later, the connection node of the batteries 18a and 18b, i.e., the negative pole of the battery 18a and the positive pole of the battery 18b are connected to the ground, in common with the inverter 15a. The battery 18c is connected in parallel with the battery 18a, and the battery 18d is connected in parallel with the battery 18b. In this case, the batteries 18c and 18d are battery cartridges removably loaded into the battery unit 18. The battery unit 18 is configured so that, once the cartridge batteries 18c and 18d are loaded thereinto, the battery 18c is connected in parallel with the battery 18a and the battery 18d is connected in parallel with the battery 18b.

The control unit 24 is configured to control the engine 12, the inverter 15a electrically connected with the main drive motor 16, and the inverter 15b electrically connected with the sub-drive motors 20 whereby the vehicle 1 can execute an engine cruise mode and a motor cruise mode appropriately. Specifically, the control unit 24 can be constituted by a microprocessor, a memory, an interface circuit, and a program for actuating these (none of these is shown).

Switching control between the engine cruise mode and the motor cruise mode is performed as follows, for example. It is assumed that the vehicle 1 is provided with a switch for selecting the engine cruise mode or the motor cruise mode.

The mode is set at the motor cruise mode in which the vehicle cruises at a comparatively low speed, repeating start and stop, on a city street. In the motor cruise mode, the control unit 24 controls to supply electric power from the battery unit 18 to the inverter 15a to drive the main drive motor 16. Meanwhile, the control unit 24 controls not to supply fuel to the engine 12 to prevent the engine 12 from producing torque. In this case, the vehicle 1 purely functions as an electric vehicle (EV).

Even when the vehicle 1 is cruising at a speed higher than a given speed, the motor cruise mode is maintained as long as an acceleration of a given amount or greater is not exerted, and the vehicle 1 is driven by the main drive motor 16.

Assume here that the driver operates the switch to change the mode to the engine cruise mode and depresses the accelerator pedal. In the engine cruise mode, the control unit 24 starts supply of fuel to the engine 12, whereby the engine 12 produces torque. Meanwhile, the control unit 24 stops the control on the inverter 15a to stop the drive by the main drive motor 16. The driver then can enjoy a feeling of driving the vehicle 1 driven by the engine 12.

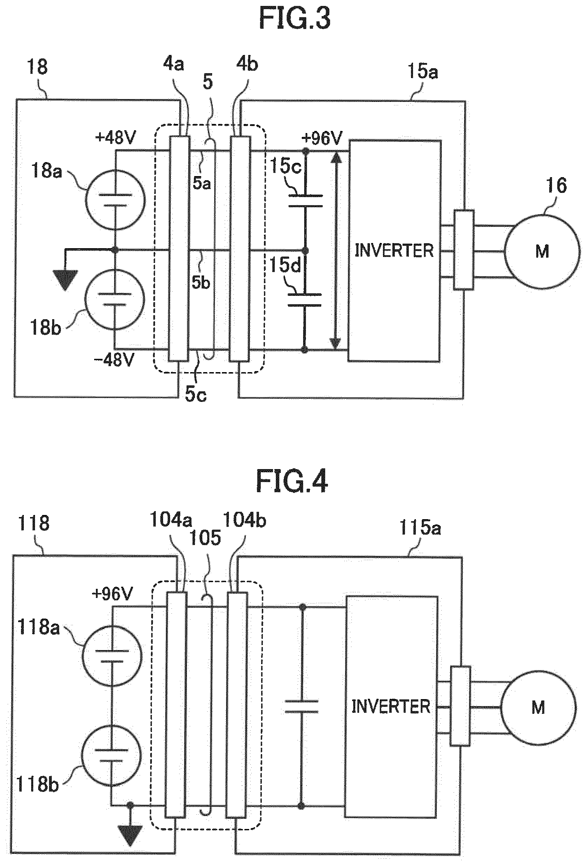

FIG. 3 shows a configuration of main circuits related to motor driving in the vehicle drive system of this embodiment. FIG. 4 shows a configuration of main circuits related to motor driving according to a comparative example.

As shown in FIG. 3, in this embodiment, a connector 4a of the battery unit 18 and a connector 4b of the inverter 15a are electrically connected through three wires 5 (5a, 5b, and 5c). In the battery unit 18, the batteries 18a and 18b are serially connected, and their connection node, i.e., the negative pole of the battery 18a and the positive pole of the battery 18b are connected to the ground. The wire 5a is connected to the positive pole of the battery 18a, the wire 5b is connected to the negative pole of the battery 18a and the positive pole of the battery 18b, and the wire 5c is connected to the negative pole of the battery 18b. That is, voltages of ±48V are output from the battery unit 18.

In the inverter 15a, capacitors 15c and 15d are serially connected, and their connection node is connected to the wire 5b. The other end of the capacitor 15c is connected to the wire 5a, and the other end of the capacitor 15d is connected to the wire 5c. That is, a voltage of 96 V is applied to the capacitors 15c and 15d.

Safety measures against high voltage are basically unnecessary for a low voltage less than 60V, and low-cost elements and parts can be used. Specifically, in the configuration of FIG. 3, inexpensive ones for low voltage can be used as the connectors 4a and 4b and the wires 5. Also, the weight of harnesses, etc. can be widely reduced.

On the contrary, in the configuration of FIG. 4, in a battery unit 118, batteries 118a and 118b are serially connected, and the voltage at both ends thereof, 96 V, is output from the battery unit 118. Therefore, as a connector 104a in the battery unit 118 and a connector 104b in an inverter 115a, high voltage-support ones must be used. Also, as wires 105 for connecting the connectors 104a and 104b, expensive and heavy ones for high voltage must be used.

In other words, in the configuration of this embodiment, since the connection node of the serially-connected batteries 18a and 18b is grounded in the battery unit 18, a positive voltage of the same value as the output voltage of the battery 18a and a negative voltage of which the absolute value is the same as the output voltage of the battery 18b, with reference to the ground, are output from the battery unit 18. This decreases the voltage of the output of the battery unit 18, and thus can keep the vehicle weight and cost from increasing.

Further, in this embodiment, to attain a motor drive voltage higher than the battery voltage 48V, a 3-level inverter is used as the inverter 15a.

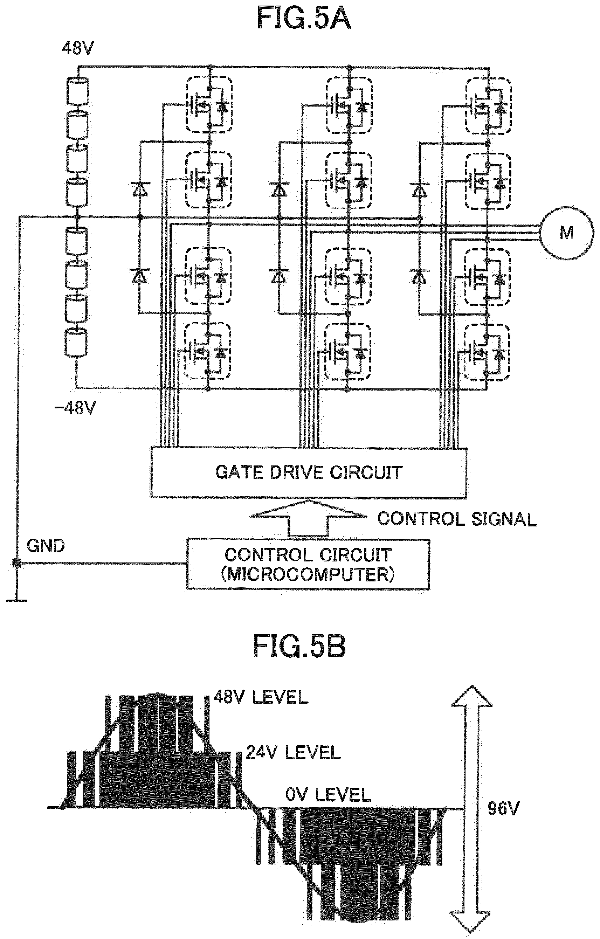

FIGS. 5A and 5B are views showing an outline of a 3-level inverter, where FIG. 5A shows a circuit configuration and FIG. 5B shows a waveform of the output voltage. As shown in FIG. 5A, in a 3-level inverter, two serially-connected switching elements are placed in each of the positive side and the negative side. For control of a 3-phase motor, a total of 12 (2 × 2 × 3) switching elements are necessary. When ±48V are given as the battery voltages, a motor drive voltage of 96 V can be generated by controlling the switching elements, as shown in FIG. 5B. As the switching elements, MOSFETs low in withstand voltage compared to IGBTs can be used.

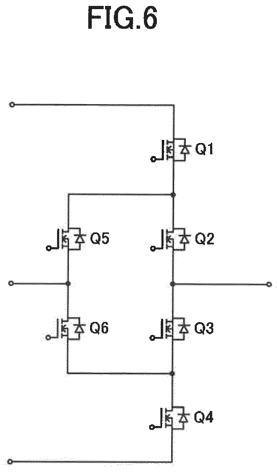

FIG. 6 shows a configuration example of an inverter circuit corresponding to one phase. In FIG. 6, the connection node of switching elements Q5 and Q6 is connected to the ground. To the switching element Q5, the same drive signal given to a switching element Q3 is given, and to the switching element Q6, the same drive signal given a switching element Q2 is given.

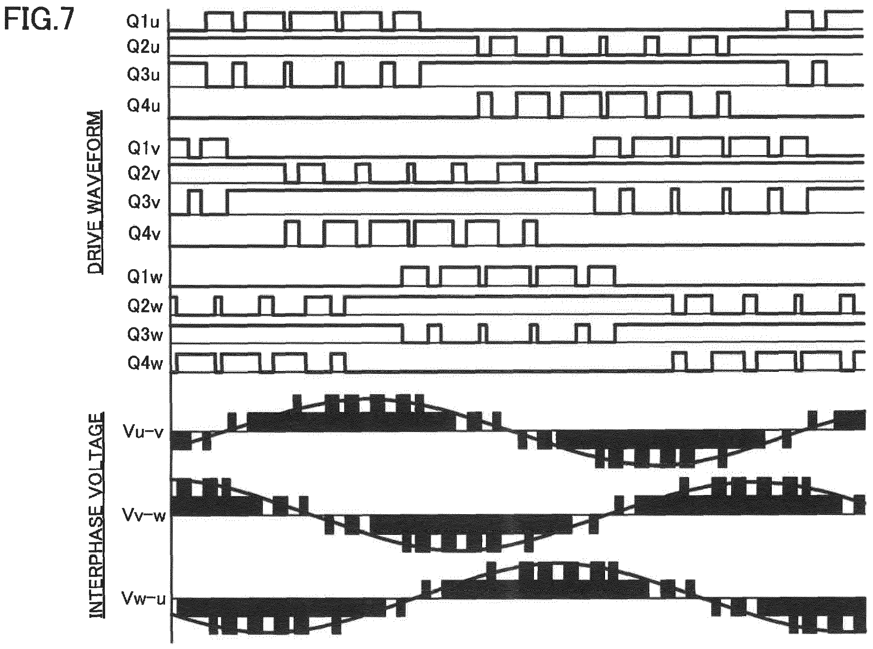

FIG. 7 shows examples of drive waveforms for the switching elements in each phase and interphase voltages. As shown in FIG. 7, the difference between voltages in two phases driven according to the drive waveforms is to be an interphase voltage between the two phases. For example, the difference between the voltage in u phase driven according to drive waveforms Qlu to Q4u and the voltage in v phase driven according to drive waveforms Qlv to Q4v is to be an interphase voltage Vu-v. By controlling the inverter as shown in FIG. 7, a motor drive voltage of 96 V can be generated from the battery voltages of ±48V, for example.

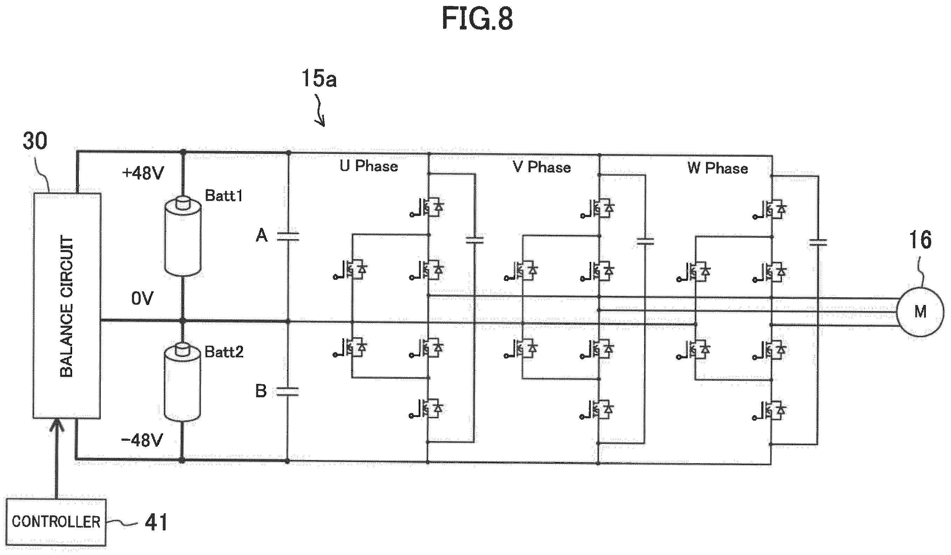

FIG. 8 shows an example of a circuit configuration related to the batteries and the inverter in the vehicle drive system of this embodiment. In the configuration of FIG. 8, Batt1 and Batt2 are 48V batteries and respectively correspond to the batteries 18a and 18b in the configuration of FIG. 2. The negative pole of the battery Batt1 and the positive pole of the battery Batt2 are connected, and their connection node is connected to the ground of the inverter 15a (a neutral point). The inverter 15a includes a capacitor A that supplies a positive-side voltage and a capacitor B that supplies a negative-side voltage. The battery Batt1 and the capacitor A are connected in parallel, and the battery Batt2 and the capacitor B are connected in parallel. That is, the connection node of the batteries Batt1 and Batt2 is connected with the connection node of the capacitors A and B.

In the configuration of FIG. 8, a balance circuit 30 is provided. The balance circuit 30 has a function of balancing the voltages of the capacitors A and B of the inverter 15a by performing charge/discharge control between the batteries Batt1 and Batt2. A controller 41 controls the operation of the balance circuit 30.

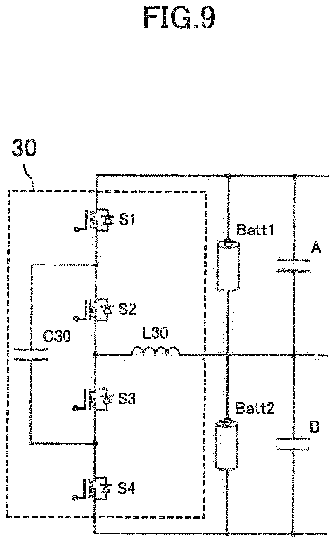

FIG. 9 shows a circuit configuration example of the balance circuit 30. The balance circuit 30 of FIG. 9 includes switches S1 and S2 serially arranged between the positive and negative poles of the battery Batt1, switches S3 and S4 serially arranged between the positive and negative poles of the battery Batt2, a capacitor C30 provided between the node of the switches S1 and S2 and the node of the switches S3 and S4, and an inductor L30 provided between the node of the switches S2 and S3 and the node of the negative pole of the battery Batt1 and the positive pole of the battery Batt2. By controlling on/off of the switches S1 to S4 by the controller 41, energy can be transferred from one of the batteries Batt1 and Batt2 to the other of the batteries Batt1 and Batt2 through the capacitor C30. The operation of the balance circuit 30 will be described later in detail.

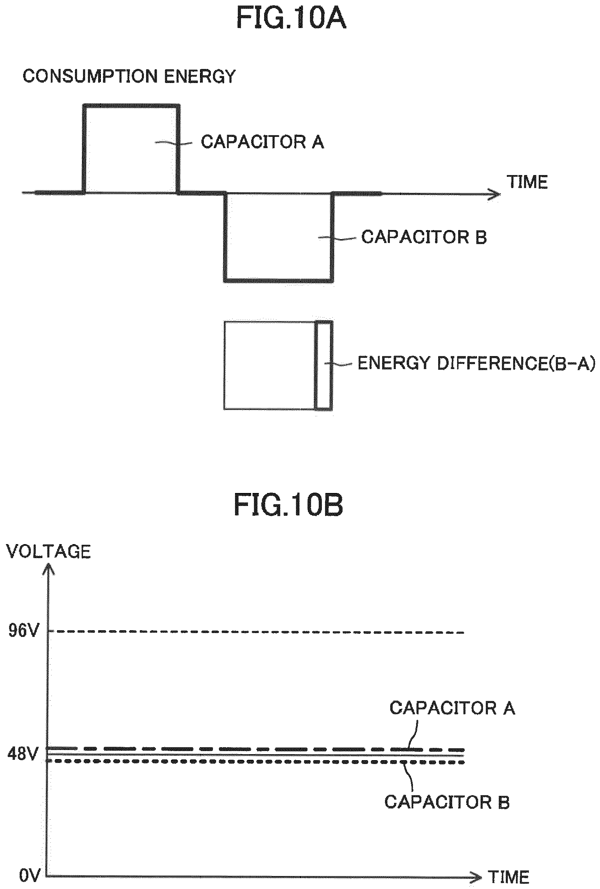

FIGS. 10A and 1B are views showing an effect obtained by providing the balance circuit 30. As shown in FIG. 10A, in the inverter 15a, the energy consumed from the capacitor A and the energy consumed from the capacitor B are not necessarily equal. This difference in consumption energy causes a deviation in voltage between the capacitors A and B. The balance circuit 30 serves to eliminate the difference in consumption energy between the capacitors A and B, whereby no deviation will occur in voltage between the capacitors A and B as shown in FIG. 10B.

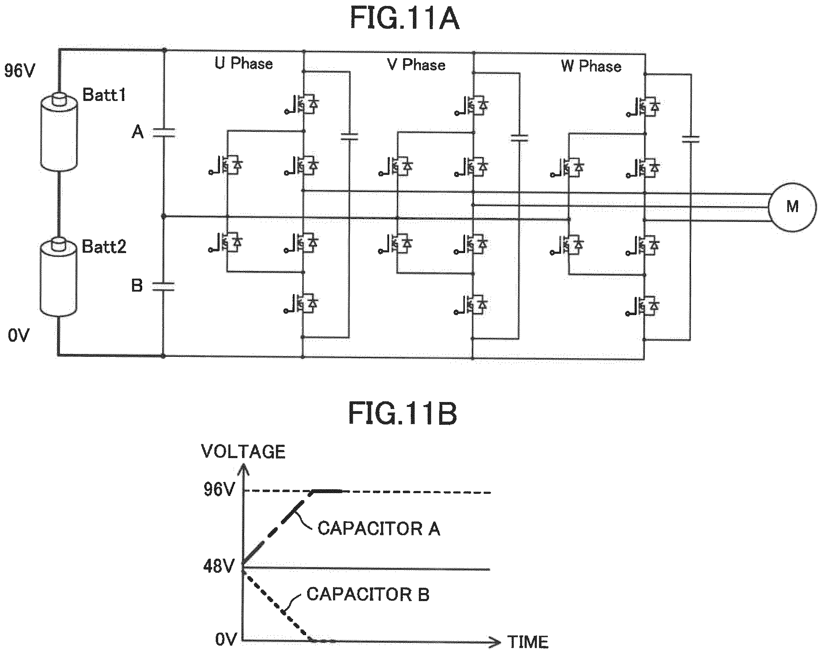

FIG. 11A shows a circuit configuration according to a first comparative example. In the first comparative example, the connection node of the batteries Batt1 and Batt2 is not connected with the ground of the inverter, and the balance circuit 30 is not provided. In the configuration of FIG. 11A, when the energy consumed from the capacitor B is greater than the energy consumed from the capacitor A, for example, the voltage of the capacitor B will drop, and the voltage of the capacitor A will rise, within a short time. As a result, an overvoltage exceeding the maximum rated voltage will be applied to electric components such as MOSFETs and capacitors of the inverter, causing a possibility of damaging such electric components.

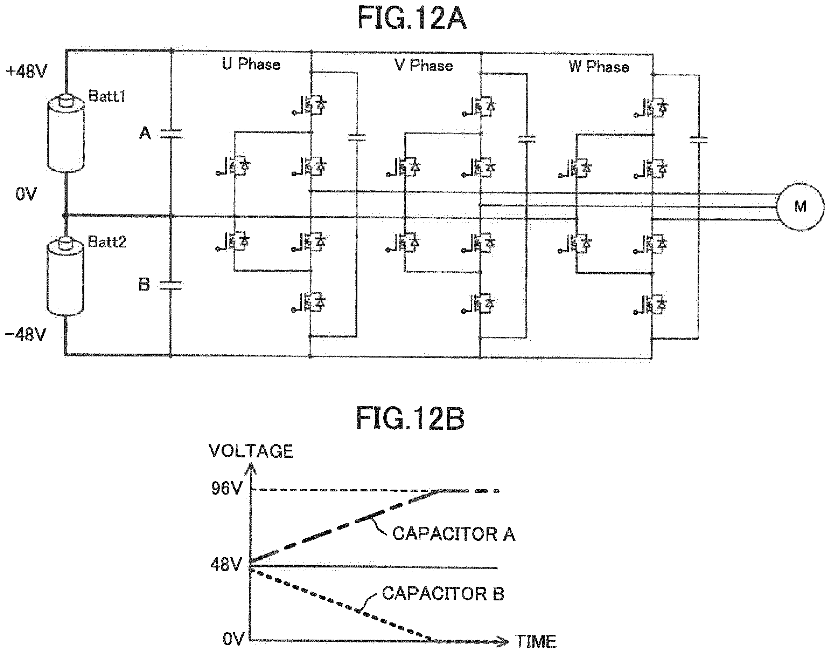

FIG. 12A shows a circuit configuration according to a second comparative example. In the second comparative example, although the connection node of the batteries Batt1 and Batt2 is connected with the ground of the inverter, the balance circuit 30 is not provided. In the configuration of FIG. 12A, when there is a difference in consumption energy between capacitors B and A, a deviation in capacitor voltage within a short time can be avoided, but the deviation in capacitor voltage becomes greater with the lapse of time as shown in FIG. 12B. As a result, eventually, an overvoltage exceeding the maximum rated voltage will be applied to electric components such as MOSFETs and capacitors of the inverter, causing a possibility of damaging such electric components.

In contrast to the above, in this embodiment, where the balance circuit is provided, such a deviation in capacitor voltage can be prevented or reduced. It is therefore possible to avoid the possibility that electric components of the inverter may be damaged. Also, since it is unnecessary to make a change to the control of the inverter itself, the motor torque can be output stably.

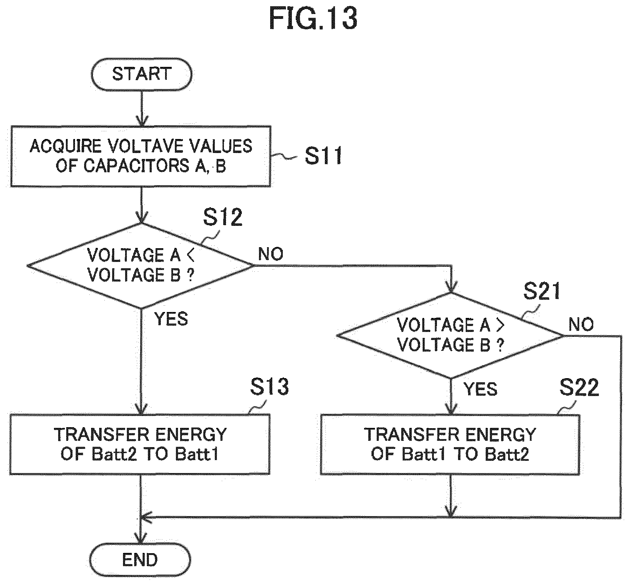

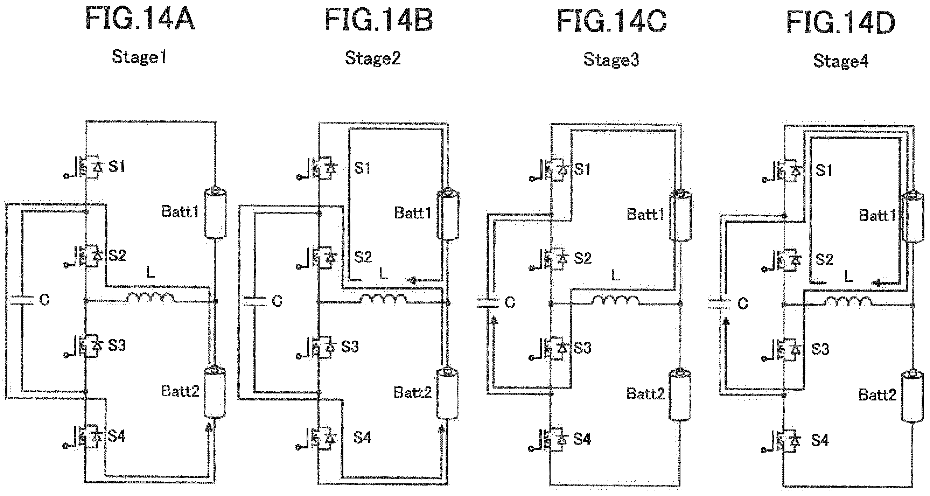

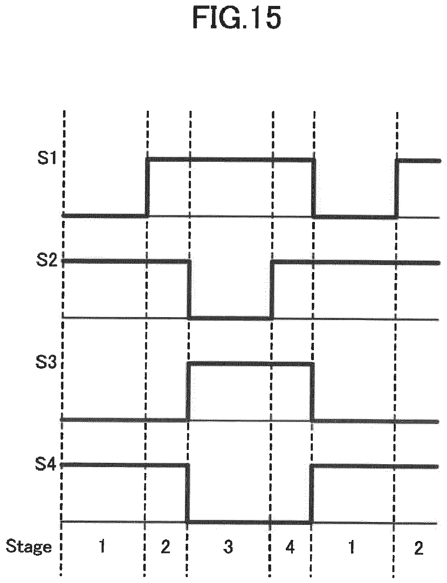

The operation of the balance circuit 30 will be described hereinafter. FIG. 13 is a flowchart showing the operation of the balance circuit 30. FIGS. 14A to 14D show the operation (stages 1 to 4) at the time of transferring energy of the battery Batt2 to the battery Batt1, and FIG. 15 shows on/off operation of the switches S1 to S4 at stages 1 to 4.

At the start of the operation of the balance circuit 30, the controller 41 acquires the voltage values of the capacitors A and B (step S11). If the voltage of the capacitor B is higher than that of the capacitor A (YES in step S12), the balance circuit 30 operates to transfer the energy of the battery Batt2 to the battery Batt1. Specifically, stages 1 to 4 as shown in FIGS. 14A to 14D are executed.

First, the controller 41 turns off the switches S1 and S3 and turns on the switches S2 and S4. By this switching, the energy of the battery Batt2 starts to be transferred to the capacitor C30 (stage 1 of FIG. 14A). Thereafter, the controller 41 turns on the switch S1. With this, energy in the inductor L30 is released (reflows) (stage 2 of FIG. 14B). The controller 41 then turns on the switches S1 and S3 and turns off the switches S2 and S4. By this switching, the energy in the capacitor C30 starts to be transferred to the battery Batt1 (stage 3 of FIG. 14C). The controller 41 then turns on the switch S2. With this, the energy in the inductor L30 is released (reflows) (stage 4 of FIG. 14D). By the operation described above, the balance circuit 30 transfers the energy of the battery Batt2 to the battery Batt1.

Contrarily, if the voltage of the capacitor A is higher than that of the capacitor B (YES in step S21), the balance circuit 30 operates to transfer the energy of the battery Batt1 to the battery Batt2. This operation is similar to the operation of transferring the energy of the battery Batt2 to the battery Batt1, and will be easily known by analogy from FIGS. 14A to 14D. Detailed description is therefore omitted here.

In the configuration of the balance circuit 30 of FIG. 9, the inductor L30 may be omitted. By providing the inductor L30, however, energy can be transferred to the capacitor C30 by use of LC resonance even when the voltage difference between the batteries Batt1 and Batt2 is small.

As described above, according to this embodiment, the vehicle drive system 10 includes the motor 16 that generates driving force for the drive wheels 2a, the inverter 15a electrically connected to the motor 16, the battery unit 18 that supplies electric power to the inverter 15a, and the control unit 24 that controls the operation of the inverter 15a. In the battery unit 18, since the connection node of the serially-connected batteries Batt1 and Batt2 is connected with the connection node of the capacitor A that supplies a positive-side voltage and the capacitor B that supplies a negative-side voltage in the inverter 15a, a positive voltage of the same value as the output voltage of the battery Batt1 and a negative voltage of which the absolute value is the same as the output voltage of the battery Batt2, with reference to the ground, are output from the battery unit 18. The inverter 15a is a 3-level inverter, and the operation thereof is controlled so that the motor drive voltage output from the inverter 15a is higher than the output voltage of the battery Batt1 and also than the output voltage of the battery Batt2. By this control, it is possible to increase the output of the motor 16 while reducing the voltage of the output of the battery unit 18 thereby keeping the vehicle weight and cost from increasing.

Further, the vehicle drive system 10 includes the balance circuit 30 for balancing the voltages of the capacitors A and B. By the charge/discharge control between the batteries Batt1 and Batt2 performed by the balance circuit 30, the voltages of the capacitors A and B can be balanced. It is therefore possible to make full use of the potential of the vehicle drive system 10 and adequately secure the motor output performance while keeping the torque fluctuations of the motor to a minimum.

While the inverter 15a is a 3-level inverter in this embodiment, the present disclosure is not limited to this. For example, the inverter 15a may be a multi-level inverter such as a 4-level inverter and a 5-level inverter. Otherwise, the inverter 15a may be an inverter that is not a multi-level inverter but of which the operation is controlled so that the motor drive voltage output therefrom is higher than the output voltage of the battery Batt1 and also than the output voltage of the battery Batt2.

Also, while the battery unit 18 includes the batteries 18a and 18b fixed in the vehicle 1 and the removable cartridge batteries 18c and 18d in this embodiment, the number of batteries and the forms thereof are not limited to these. For example, the battery unit may include two batteries fixed in the vehicle and no cartridge batteries. Otherwise, one or both of the batteries 18a and 18b may be provided as cartridge batteries.

The voltage of each battery, the number of battery cells constituting the battery, and the voltage of each battery cell are not limited to those described in this embodiment. It is however preferable that the output voltage of each battery is less than 60V, for example, from the standpoint of the objective of the present disclosure of reducing the output voltage of the battery unit to keep the vehicle weight and cost from increasing.

While description has been made assuming that the vehicle drive system of this embodiment is a hybrid drive system, the present disclosure may also be applied to a motor drive system.

It is to be understood that the above-described embodiment is a mere illustration and the scope of the present disclosure should not be construed restrictively. It is also to be understood that the scope of the present disclosure is defined by the appended claims, and that all changes and modifications belonging to the equivalent scope of the claims will fall within the scope of the present disclosure.

## Claims

1. A vehicle drive system (10), comprising:
a motor (16, 20) that generates driving force for drive wheels (2a, 2b);
an inverter (15a, 15b) electrically connected to the motor (16, 20), having a first capacitor (A) that supplies a positive-side voltage and a second capacitor (B) that supplies a negative-side voltage;
a battery unit (18) that supplies electric power to the inverter (15a, 15b); and
a control unit (24) that controls operation of the inverter (15a, 15b), wherein
the battery unit (18) has serially-connected first (18a, Batt1) and second (18b, Batt2) batteries, and a negative pole of the first battery (18a, Batt1) and a positive pole of the second battery (18b, Batt2) that are mutually connected are connected with a connection node of the first (A) and second (B) capacitors of the inverter (15a, 15b),
the control unit (24) controls the operation of the inverter (15a, 15b) so that a voltage output from the inverter (15a, 15b) to the motor (16, 20) is higher than an output voltage of the first battery (18a, Batt1) and also than an output voltage of the second battery (18b, Batt2), and
the vehicle drive system (10) further comprises a balance circuit (30) that balances the voltages of the first (A) and second (B) capacitors by performing charge/discharge control between the first (18a, Batt1) and second (18b, Batt2) batteries.

2. The vehicle drive system (10) of claim 1, wherein
the balance circuit (30) includes
first and second switches (S1, S2) serially connected between a positive pole and the negative pole of the first battery (18a, Batt1),
third and fourth (S3, S4) switches serially connected between the positive pole and a negative pole of the second battery (18b, Batt2), and
a capacitor of which one end is connected to a node of the first switch (S1) and the second switch (S2) and the other end is connected to a node of the third switch (S3) and the fourth switch (S4).

3. The vehicle drive system (10) of claim 2, further comprising
a controller (41) that controls on/off of the first to fourth switches (S1, S2, S3, S4) of the balance circuit (30),
wherein
if the voltage of the second capacitor (B) is higher than the voltage of the first capacitor (A), the controller (41) performs first operation of turning off the first and third switches (S1, S3) and turning on the second and fourth switches (S2, S4), and thereafter performs second operation of turning on the first and third switches (S1, S3) and turning off the second and fourth switches (S2, S4), and
if the voltage of the first capacitor (A) is higher than the voltage of the second capacitor (B), the controller performs the second operation and thereafter performs the first operation.

4. The vehicle drive system (10) of claim 2, wherein
the balance circuit (30) includes an inductor (L30) provided between a node of the second and third switches (S2, S3) and the node of the first (A) and second (B) capacitors.

5. The vehicle drive system (10) of claim 1, wherein
the battery unit (18) is configured so that third (18c, Batt3) and fourth (18d, Batt4) batteries each in a form of a cartridge (50) are removably loaded, and the loaded third battery (18c, Batt3) is connected in parallel with the first battery (18a, Batt1) and the loaded fourth (18b, Batt4) battery is connected in parallel with the second battery (18b, Batt2).

6. The vehicle drive system (10) of claim 1, wherein
the inverter (15a, 15b) is a multi-level inverter.

7. The vehicle drive system (10) of claim 1, wherein
the output voltages of the first (18a, Batt1) and second (18b, Batt2) batteries are each less than 60V.

8. The vehicle drive system (10) of any one of claims 1 to 7, further comprising:
an engine (12) that drives rear wheels (2a); and
a force transmission mechanism (14) that transmits driving force to the rear wheels (2a),
wherein
the motor (16, 20) includes a main drive motor (16) that drives the rear wheels (2a) and a sub-drive motor (20) that drives front wheels (2b),
the inverter (15a, 15b) includes a first inverter (15a) electrically connected to the main drive motor (16) and a second inverter (15b) electrically connected to the sub-drive motor (20),
the batteries (18) supply electric power to the first (15a) and second (15b) inverters, and
the control unit (24) controls the engine and the first and second inverters (15a, 15b).

9. The vehicle drive system (10) of claim 8, wherein
the engine (12) is a rotary engine and placed in a front part of the vehicle.

10. The vehicle drive system (10) of claim 8 or 9, wherein
the main drive motor (16) is placed to be adjacent to the engine (12) on the rear side of the engine (12).

11. The vehicle drive system (10) of any one of claims 8 to 10, wherein
the sub-drive motor (20) is an in-wheel motor housed in each of the front wheels.

12. The vehicle drive system (10) of any one of claims 8 to 11, wherein
a switch for selecting an engine cruise mode or a motor cruise mode is provided in the vehicle, and
the control unit (24) controls so that
in the motor cruise mode, while electric power from the battery unit (18) is supplied to the first inverter (15a) to drive the main drive motor (16), no fuel is supplied to the engine (12), and
in the engine cruise mode, while fuel is supplied to the engine (12), control of the first inverter (15a) is stopped to stop driving by the main drive motor (16).
